# EUROPÄISCHE PATENTSCHRIFT

(11) **EP 0 712 777 B1**
(45) Veröffentlichungstag und Bekanntmachung des Hinweises auf die Patenterteilung: **02.09.1998**
(21) Anmeldenummer: 95116606.5
(22) Anmeldetag: 21.10.1995
(51) Int. Cl.: B62D 29/04, B62D 21/18, B62D 21/11

(54) **Chassisaufbau aus Kunststoff für einen Rasenmäher**
Synthetic chassis for a lawn mower
Châssis en matières synthétiques pour tondeuse à gazon

(30) Priorität: 03.11.1994 US 333923
(43) Veröffentlichungstag der Anmeldung: 22.05.1996
(73) Patentinhaber: DEERE & COMPANY, Moline Illinois 61265-8098 (US)
(72) Erfinder: Cerny, John Robert, Bettendorf, Iowa 52722 (US); El-Zein, Mohamad Samih, Bettendorf, Iowa 52722 (US); Curry, Richard Alan, Moline, Illinois 61265 (US); Popelier, Maurice Alois, East Moline, Illinois 61244 (US); Krause, Harold Eugene, Milan, Illinois 61264 (US)
(74) Vertreter: Feldmann, Bernhard

(56) Entgegenhaltungen:
- EP-A- 0 213 367
- EP-A- 0 518 201
- BE-A- 506 485
- DE-A- 3 429 989
- US-A- 5 174 627

## Beschreibung

Die Erfindung bezieht sich auf einen ausschließlich aus Kunststoff bestehender Chassisaufbau für ein Fahrzeug zur Aufnahme einer Antriebsvorrichtung, von lenkbaren und antreibbaren Rädern und einer Lenkeinrichtung, wobei der Chassisaufbau in seinem einen Endbereich einen Leerraum aufweist, in dem eine sich auf mindestens einem Rad abstützende Kombination aus Getriebe und Fahrzeugmotor befindet, an der der Chassisaufbau befestigt ist.

Faserverstärkte Kunststoffe finden seit einiger Zeit im Fahrzeugbau verstärkt Anwendung, und zwar insbesondere bei Personenkraftwagen, deren Karosserie aus Kunststoff besteht und durch Metallteile verstärkt ist. Auch ist es nicht mehr neu, Kunststoffe auch bei tragenden Teilen einzusetzen, dann allerdings zusammen mit einem metallischen Skelett.

Der eingangs genannte tragende Chassisaufbau nach dem Oberbegriff des Anspruchs 1 (US-A-5 174 627) ist für Fahrzeuge vorgeschlagen worden, die vorwiegend in der Grundstücks- und Rasenpflege einsetzbar sind. Es handelt sich dabei um Kleinfahrzeuge gedrungener Bauweise, auf denen in der Regel nur die Bedienungsperson Platz findet. Über angebaute oder angehängte Arbeitsgeräte, wie Rasenmäher, erfolgt die Grundstückspflege. Der in diesem Dokument vorgeschlagene Fahrzeugaufbau benötigt keine metallischen Verstärkungen, besteht aus einem faserverstärkten Thermoplast und im wesentlichen aus drei separaten Teilen, die im zusammengebauten Zustand miteinander verklebt sind und Hohlzellen bilden, um den auftretenden Torsions- und Biegekräften standzuhalten.

Bei einem Landwirtschaftlichen Fahrzeug ist es bereits bekannt (BE-A-506 485), dessen Rahmen mit flexiblen Teilen zu versehen, um von den Rädern eingeleitete Kräfte abzufedern.

Die der Erfindung zugrundeliegende Aufgabe wird in einer noch vorteilhafteren Ausgestaltung derartiger Fahrzeugaufbauten gesehen, weshalb nach der Erfindung vorgesehen ist, daß der Chassisaufbau aus mindestens zwei Abstand zueinander aufweisenden Teilen mit geringer Flexibilität und aus eine höhere Flexibilität aufweisenden oder relativ flexiblen Teilen zur Aufnahme von Torsion- und/oder Biegekräften gebildet ist und mit Bezug auf seine Längsrichtung vor und hinter den Teilen mit einer höheren Flexibilität nur Teile mit einer geringeren Flexibilität aufweist, wobei wenigstens einige der Teile mit höherer Flexibilität den Leerraum seitlich begrenzen, und an deren Oberseite Teile mit einer geringeren Flexibilität vorgesehen sind.

Damit sind die Teile mit geringer Flexibilität relativ unflexibel und dienen als tragende Teile, so daß bei auf diese Teile einwirkenden Torsions- und/oder Biegekräften die Teile mit der höheren Flexibilität sich diesen Kräften anpassen können und entsprechend reagieren.

Derartige Aufbauten lassen sich ferner nach der Erfindung einstückig formen, wodurch sich eine besonders vorteilhafte Weiterentwicklung ergibt. Insbesondere kann dadurch auf Nähte, Verklebungen usw. verzichtet werden. Eine kostengünstige Massenherstellung wird ermöglicht.

Weiterhin wird vorgeschlagen, daß die Teile mit der geringeren Flexibilität profilierte Abschnitte aufweisen, wodurch diesen Teilen die notwendige Steifigkeit vermittelt wird. Diese läßt sich aber auch durch andere Mittel, wie anders gestaltete Wandstärken, entsprechend gewählte Polymere usw. erreichen.

Die Erfindung läßt sich besonders vorteilhaft bei Fahrzeugen mit einem Chassisaufbau einsetzten, der noch einen Abschnitt zur Aufnahme eines Fahrersitzes aufweist, so daß sich auch Teile mit höherer Flexibilität in dem Abschnitt für die Fahrersitzaufnahme befinden, sich an die den Leerraum seitlich begrenzenden Teile anschließen und an ihrer Oberkante Teile mit einer geringeren Flexibilität aufnehmen können. In weiterer Ausgestaltung dieser Fälle können dann noch die die Oberkante oder Oberseite der Teile mit höherer bildenden Teile mit geringerer Flexibilität miteinander über einen weiteren Teil mit geringerer Flexibilität verbunden sein. Im ganzen gesehen ergibt sich damit ein Fahrzeugaufbau, der an seinen Enden, in dem Bereich für die Fahrersitzaufnahme und an seinen oberen Abschlußkanten relativ steif bzw. unflexibel ausgebildet ist, wobei beide Seiten noch durch einen relativ steifen Teil miteinander verstrebt sind. Von dem Getriebe und dem Motor ausgehende Belastungen werden nicht oder nur geringfügig in den Chassisaufbau geleitet. Bei einem Überfahren eines Hindernisses werden die in die relativ steifen Kunststoffteile eingeleiteten Kräfte durch die relativ flexiblen Kunstoffteile an den beiden Fahrzeugseiten aufgefangen und abgebaut. Da keine Nähte oder Verklebungen vorgesehen sind, können diese auch nicht belastet werden. Die Formstabilität ändert sich bei einem Überfahren von Hindernissen nicht oder nur unwesentlich.

Im einzelnen können die Teile mit einer höheren Flexibilität derart ausgebildet sein, daß sie bei auf die Teile mit einer geringeren Flexibilität einwirkenden Torsions- und/oder Biegekräften sich drehen und biegen können, wobei die Teile mit einer höheren Flexibilität an jeder Chassisseite mindestens zwei flexible sich längs erstreckende Abschnitte aufweisen, die an einer gemeinsamen Kante miteinander verbunden sind. Hinzu kommt, daß wenigstens ein flexibler Abschnitt eine längs verlaufende Kante aufweist, die mit einer Kante eines Teils mit geringerer Flexibilität integriert ist.

Alternativ wird vorgeschlagen, daß die Teile mit geringerer Flexibilität über Scharnierteile miteinander verbunden sind, die erste und zweite relativ flexible Abschnitte aufweisen, so daß ein erster Teil mit geringerer Flexibilität gegenüber einem zweiten Teil mit geringerer Flexibilität sich relativ bewegen kann, wobei jeder Scharnierteil einen dritten flexiblen Abschnitt aufweist, der mit dem ersten flexiblen Abschnitt verbunden ist, und jeder Scharnierteil einen fünften flexiblen Abschnitt aufweist, der mit dem ersten flexiblen Abschnitt verbunden ist. Mindestens ein flexibler Abschnitt kann sich längs erstreckend ausgebildet und um seine Längsachse gedreht sein, so daß die beiden flexiblen Abschnitte bei auf die Teile mit der geringeren Flexibilität einwirkenden Torsions- und/oder Biegekräften sich nach innen und nach außen biegen können.

Vorteilhaft können zwei zusammenwirkende Teile mit höherem Flexibilität Blattfedereigenschaften haben. Sie können hierzu entsprechend geformt sein. Jedenfalls können zwei zusammenwirkende Teile mit höherer Flexibilität Federungs- bzw. Dämpfungseigenschaften haben, so daß zusätzliche Stoßfänger nicht erforderlich werden, da Stöße von den flexiblen Teilen aufgefangen werden können.

Was die Steifigkeit durch entsprechende Profilierung anbelangt, so kann erfindungsgemäß wenigstens eines der Teile mit einer geringeren Flexibilität V-förmig ausgebildet sein, wobei auch der Abschnitt zur Fahrersitzaufnahme an den beiden Seiten des Chassis V-förmig ausgebildet ist, so daß in diesem Bereich eine geringere Flexibilität herrscht.

Andererseits ist es möglich, daß wenigstens eines der Teile mit einer geringeren Flexibilität eine gerollte Kante aufweist oder daß wenigstens eins der Teile mit einer geringeren Flexibilität in einem spitzen Winkel gekröpft ausgebildet ist. Derartige Profilierungen können untereinander und auch mit der V-Form kombiniert werden.

Wenigstens eines der Teile mit einer geringeren Flexibilität kann aus drei im wesentlichen planaren Paneelen bestehen, die miteinander verbunden sind und einen C-förmigen Abschnitt bilden.

Hinsichtlich der Materialien bzw. deren Aufbau wird schwerpunktmäßig darauf hingewiesen, daß der Werkstoff, aus dem der Chassisaufbau besteht, isotropisch sein sollte, wobei der Kunststoff, aus dem der Chassisaufbau besteht, verstärkt ist, und die Verstärkungen im Chassis gleichmäßig verteilt sind.

Die Verstärkungen können gewirkte Fiberlamellen bzw. -matten aufweisen. Vorteilhafterweise sind zumindest zwei Fiberlamellen bzw. -matten vorgesehen, wobei deren Ausrichtung nicht fluchtet.

Der Kunststoff, aus dem der Chassisaufbau besteht, kann Glasfiber-Verstärkungen aufweisen, wobei das Glasfiber ohne bevorzugte Orientierung im Kunststoff verteilt ist. Alle diese Maßnahmen machen es möglich, daß der Aufbau in vielerlei unterschiedlichen Verfahren hergestellt werden kann, und zwar in einer kostengünstigen Massenproduktion mit relativ dünnen Wänden.

In der Zeichnung ist ein nachfolgend näher erläutertes Ausführungsbeispiel der Erfindung dargestellt. Es zeigt:
- Fig. 1: ein Motor angetriebenes Fahrzeug in Form eines Sitzrasenmähers in perspektivischer Ansicht von hinten,
- Fig. 2: den aus Faser verstärkten Kunststoff bestehenden Chassisaufbau des Fahrzeuges nach Fig. 1,
- Fig. 3: einen rückwärtigen Ausschnitt aus dem Chassisaufbau in der Draufsicht und in einem unbelasteten Zustand, wobei die flexiblen Kunststoffteile als Drahtgeflecht schematisch angedeutet sind,
- Fig. 3A: die Fahrzeugräder des Chassisaufbaus auf ebenen Boden,
- Fig. 4: eine perspektivische Darstellung des Ausschnittes nach Fig. 3,
- Fig. 4A: eine ähnliche Darstellung wie Fig. 3A,
- Fig. 5A-D: den Chassisaufbau mit Fahrzeugrädern im unbelasteten Zustand und belasteten Zustand, wenn
- kein Fahrzeugrad auf ein Hindernis auftrifft (Fig. 5A)
- das rechte Hinterrad auf ein Hindernis auftrifft (Fig. 5B)
- das linke Vorderrad auf ein Hindernis auftrifft (Fig. 5C)
- das linke Hinterrad auf ein Hindernis auftrifft (Fig. 5D),
- Fig. 6: zwei flexible Kunststoffteile in vergrößerter Darstellung und ihr Blattfederverhalten bei Stößen,
- Fig. 7: fünf flexible Kunststoffteile mit Blattfeder- und Spiralfederverhalten bei Torsions- und Biegekräften,
- Fig. 8: eine ähnliche Darstellung, wie in Fig. 3, wobei jedoch der belastete Zustand des Chassisaufbaus schematisch angedeutet ist für den Fall, daß das rechte Hinterrad ein Hindernis überfährt, wie es Fig. 8A zeigt,
- Fig. 9: eine ähnliche Darstellung, wie in Fig. 4 und bei dem Belastungszustand nach Fig. 8, wobei Fig. 9A der Fig. 8A entspricht,
- Fig. 10: einen Schnitt nach der Linie 10-10 in Fig. 2,
- Fig. 11: einen Faser verstärkten Kunststoffteil in schematischer Darstellung mit willkürlich plazierten Fasern,
- Fig. 12: ein Kunststoffteil mit einer Faserlamelle,
- Fig. 13: einen Kunststoffteil mit zwei zueinander nicht ausgerichteten Faserlamellen,
- Fig. 14: einen Kunststoffteil mit einer Faserlamelle und zusätzlichen willkürlich plazierten Fasern und
- Fig. 15: die linke Seite des Chassisaufbaus in perspektivischer Ansicht von hinten und im Ausschnitt.

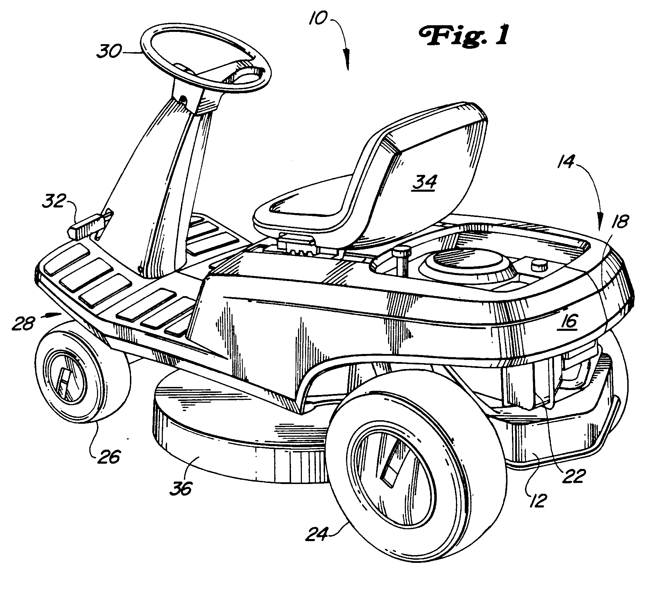

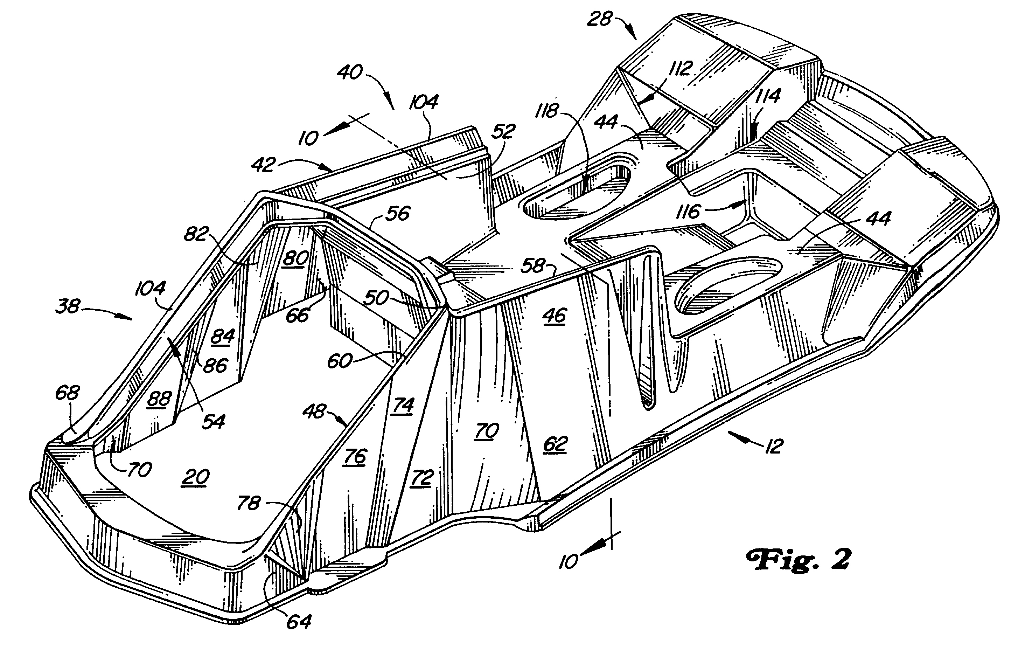

In Fig. 1 der Zeichnung ist ein Fahrzeug 10 in Form eines sogenannten Sitzrasenmähers dargestellt, an dem der Chassisaufbau nach der vorliegenden Erfindung Verwendung finden kann. Der Chassisaufbau ist mit 12 bezeichnet und trägt eine obere Fahrzeugverkleidung 14. Diese besteht aus zwei miteinander verklebten rechten und linken Hälften 16 und 18 und kann mit dem Chassisaufbau ebenfalls verklebt sein. Am rückwärtigen Ende des Chassisaufbaus 12 ist ein nach oben und unten offener Leerraum 20 (Fig. 2) erkennbar. Er dient zur Aufnahme einer Motor-Getriebe-Kombination 22. Unterhalb des Chassisaufbaus 12 sind nicht dargestellte Radaufhängungen zur Aufnahme von rückwärtigen Treibrädern 24 und vorderen lenkbaren Laufrädern 26 vorgesehen. Nahe eines vorderen Abschnittes 28 des Fahrzeuges und des Chassisaufbaus 12 sind eine Lenksäule mit einem Lenkrad 30, ein Kupplungspedal 32 und ein nicht dargestelltes Bremspedal vorgesehen. Ein Fahrzeugsitz 34 ist auf einem oberen oder erhöhten Abschnitt des Chassisaufbaus 12 montiert. Unterhalb des Chassisaufbaus 12 ist zwischen den Rädern ein Mähwerksgehäuse 36 aufgehängt. Ein derartiges Fahrzeug ist auch in dem Dokument EP-A2-0 518 201 behandelt, weshalb auf dieses Dokument ausdrücklich Bezug genommen wird.

In Fig. 2 ist der Chassisaufbau 12 dargestellt. Es handelt sich dort um eine perspektivische Ansicht von hinten. Der Leerraum 20 ist in dem Heckabschnitt 38 erkennbar. Der erhöhte Mittenabschnitt 40 ist als ein Tragwerk 42 für die Aufnahme des Fahrersitzes 34 ausgestaltet. Der Frontabschnitt 28 ist teilweise flach und frontseitig leicht nach oben abgewinkelt und dient als Plattform 44 oder Auflage für die Aufnahme einer Fußaufstandsfläche für die Bedienungsperson.

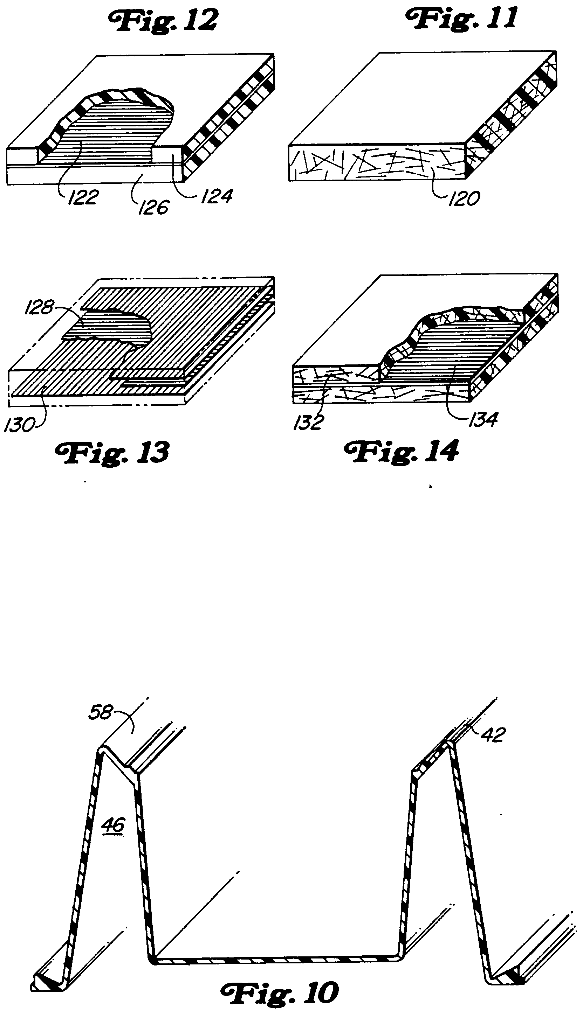

Der Frontabschnitt 28 des Chassisaufbaus 12 ist im wesentlichen starr oder mehr oder weniger biegefest geformt und geht an seiner rechten oder in Fig. 2 vorn liegenden Seite im Mittenabschnitt 40 des Chassisaufbaus 12 in einen ersten umgekehrt V-förmig gestalteten Starrteil 46 (siehe auch Fig. 10) über. Dieser ist mehr oder weniger biegefest und über Flexteile an einen zweiten mehr oder weniger biegefesten Starrteil 48 im Heckabschnitt 38 angeschlossen. Der zweite Starrteil 48 geht an einer Verbindungsstelle 50 in den ersten Starrteil 46 über und verläuft von dieser Verbindungsstelle aus entlang des Leerraums 20 nach unten zu einem rückwärtigen Stoßfangbereich am Chassisaufbau 12. An der vom Fahrerplatz aus gesehenen linken Seite des Chassisaufbaus 12 geht der Frontabschnitt 28 in einen dritten Starrteil 52 über. Dieser ist ebenso wie der erste Starrteil 46 umgekehrt V-förmig ausgebildet, mehr oder weniger biegefest und über einen oder mehrere Flexteile, d.h. aus Kunststoff bestehende und gegebenenfalls faserverstärkte Teile, die bei auftretenden Belastungen sich biegen und drehen können und bei beendeter oder nachlassender Belastung wieder in ihre Ursprungsform zurückspringen, mit einem vierten Starrteil 54 am Heckabschnitt 38 verbunden, der wie der zweite Starrteil 48 ausgestaltet ist. Ein fünfter Starrteil 56, der ebenfalls mehr oder weniger biegefest ausgebildet ist, verläuft an der Vorderseite des Leerraums 20 und verbindet die Starrteile 46, 48 und 52, 54 an den beiden Seiten des Chassisaufbaus 12 miteinander. Unter dem Ausdruck "mehr oder weniger biegefest" ist auch eine halbstarre Ausgestaltung zu verstehen. In jedem Fall weisen die Starrteile eine geringere Verformbarkeit als die Flexteile auf, weshalb in den Ansprüchen nur von Teilen mit einer höheren Flexibilität und von Teilen mit einer geringeren Flexibilität die Rede ist.

Da die linke Seite des Chassisaufbaus spiegelbildlich und ansonsten identisch zur rechten Seite ausgebildet ist, wird nachfolgend nur die rechte Seite mit ihren Starrteilen 46 und 48 und dem oder den Flexteilen im einzelnen beschrieben, es sei denn, es wird ausdrücklich darauf hingewiesen.

Aus Fig. 2 ist erkennbar, daß der Starrteil 46 an seiner Oberseite eine gerollte Kante oder Rippe 58 aufweist, die sich in Fahrzeuglängsrichtung erstreckt und mit dem vorderen Ende einer ähnlich gestalteten Kante oder Rippe 60 an der Oberkante des zweiten Starrteils 48 verbunden ist. Beide Kanten oder Rippen 58, 60 erstrecken sich nach unten und haben eine umgekehrt V-förmige Gestalt, um eine ausreichende Festigkeit und Steifigkeit zu gewährleisten.

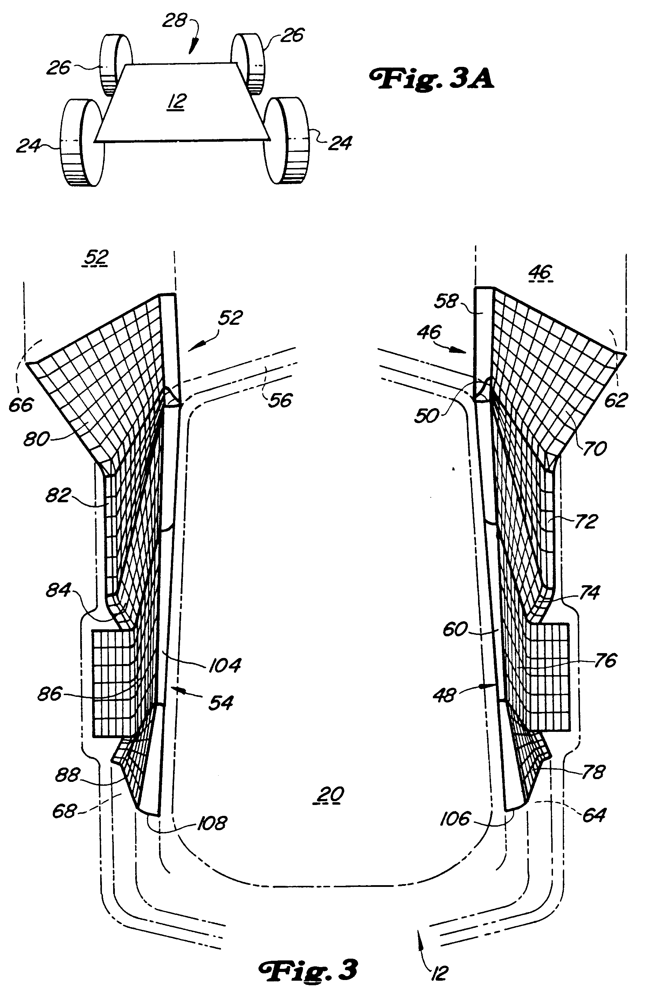

Bei dem bevorzugten Ausführungsbeispiel sind fünf Flexteile oder Felder an jeder Seite des Chassisaufbaus 12 den Starrteilen 46, 48 bzw. 52, 54 zugeordnet bzw. an diesen oder zwischen diesen vorgesehen. Während fünf separaten Flexteilen oder ausgeprägten Feldern der Vorzug gegeben wird, sind auch weniger oder nur ein einziges Paneel mit der erwünschten Konfiguration zum Auffangen von Durchbiegungen, Verdrehungen usw. denkbar. Gleichfalls können die einzelnen Flexteile über gerundete Übergänge ineinander übergehen anstelle der in der Zeichnung angedeuteten scharfen oder ausgeprägten Übergänge. Die fünf Flexteile an jeder Chassisaufbauseite dienen als erster oder zweiter Gehänge- oder Federteil zum Miteinanderverbinden der auseinanderliegenden Abschnitte 62 und 64 des ersten und zweiten Starrteils 46, 48 und des dritten und vierten Starrteils 52, 54. Die Flexteile an der rechten Seite des Chassisaufbaus sind mit 70, 72, 74, 76 und 78 bezeichnet, während die Flexteile an der linken Seite des Chassisaufbaus mit den Bezugsnummern 80, 82, 84, 86 und 88 versehen sind. Um besser verstehen zu können, wie diese Teile flexibel reagieren, wenn Biegekräfte, Torsionskräfte usw. auf den Chassisaufbau einwirken, sind in den Fig. 3, 4, 8 und 9 Abbildungen in Drahtgestellform vorgesehen.

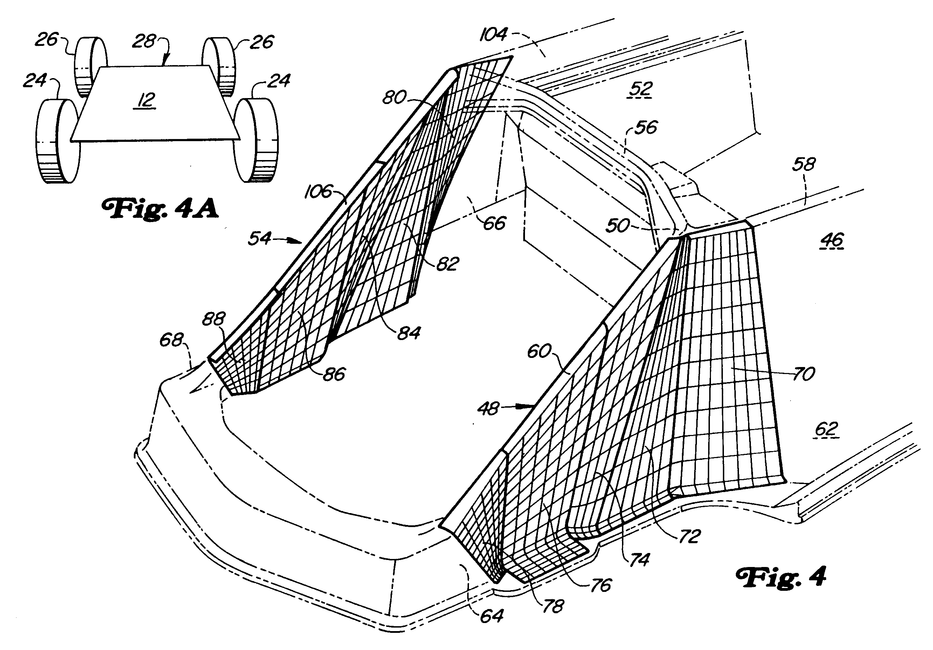

In den Fig. 3 und 4 sind die rechten und linken Sätze von Flexteilen 70 bis 78 und 80 bis 88 erkennbar, und zwar in Fig. 3 in der Draufsicht und in Fig. 4 in einer perspektivischen Ansicht von rechts hinten. Beide Figuren zeigen das Fahrzeug in einem unbelasteten Zustand, d. h. keines der Räder trifft auf ein Hindernis, wie es in den Schemazeichnungen in den Fig. 3A und 4A angedeutet ist. In einem solchen Zustand sind keine nennenswerten Biegebelastungen oder Torsionsbelastungen, die auf den Chassisaufbau einwirken könnten, zu befürchten. Die Fig. 3A und 4A zeigen eine Ansicht von hinten, so daß der Frontabschnitt 28 jeweils oben ist.

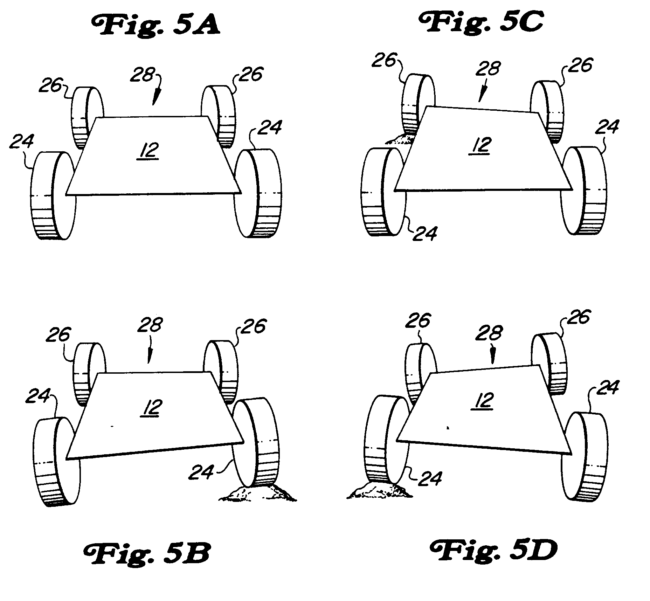

Die Fig. 5B, 5C und 5D zeigen Abbildungen, wenn eines oder mehrere Räder auf ein Hindernis oder auf eine Bodenerhöhung stoßen. Fig. 5A zeigt das Fahrzeug auf ebenem Grund. In Fig. 5B ist der Fall angedeutet, wenn das rechte hintere Rad 24 auf eine Bodenerhöhung bzw. ein Hindernis auftrifft. Fig. 5C zeigt die Verformungen bei einem Auftreffen des linken Vorderrades 26 auf ein Hindernis, während Fig. 5D das Auftreffen des linken rückwärtigen Rades 24 auf ein Hindernis zeigt. In allen in den Fig. 5B bis 5D gezeigten Fällen tritt ein Verbiegen und Verdrehen des Chassisaufbaus 12 ein.

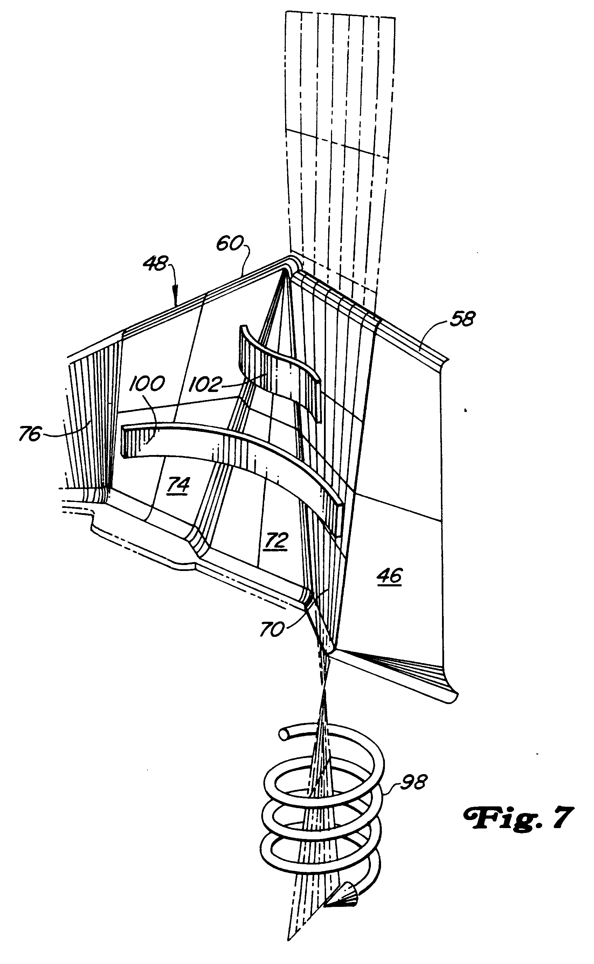

Fig. 7 zeigt einen vergrößerten Ausschnitt in perspektivischer Ansicht der rechten Seite des Chassisaufbaus 12 für das bevorzugte Ausführungsbeispiel mit fünf Flexteilen 70, 72, 74, 76 und 78 zwischen den beiden Starrteilen 46 und 48. In schematischer Form deutet eine Spiralfeder 98 die Fähigkeit des ersten Flexteils 70 mit seiner gewundenen bandähnlichen Konfiguration an, sich Torsionsbelastungen anzupassen, diese zu übertragen und diesen standzuhalten. Eine Blattfeder 100, die sich über die Breite oder fast über die Breite der fünf Flexteile 70, 72, 74, 76 und 78 erstreckt, zeigt in schematischer Weise die Fähigkeit der Flexteile 70, 72, 74, 76 und 78 als ein Scharnier oder eine Flachfeder zusammenzuwirken. In ähnlicher Weise könnten jeweils zwei der Flexteile als eine C-förmige Blattfeder 102 oder jeweils drei Flexteile könnten als S-förmige Blattfeder 102 zusammenwirken, um Biegekräfte, die zwischen dem ersten und dem zweiten Starrteil 46 und 48 auftreten, zu absorbieren.

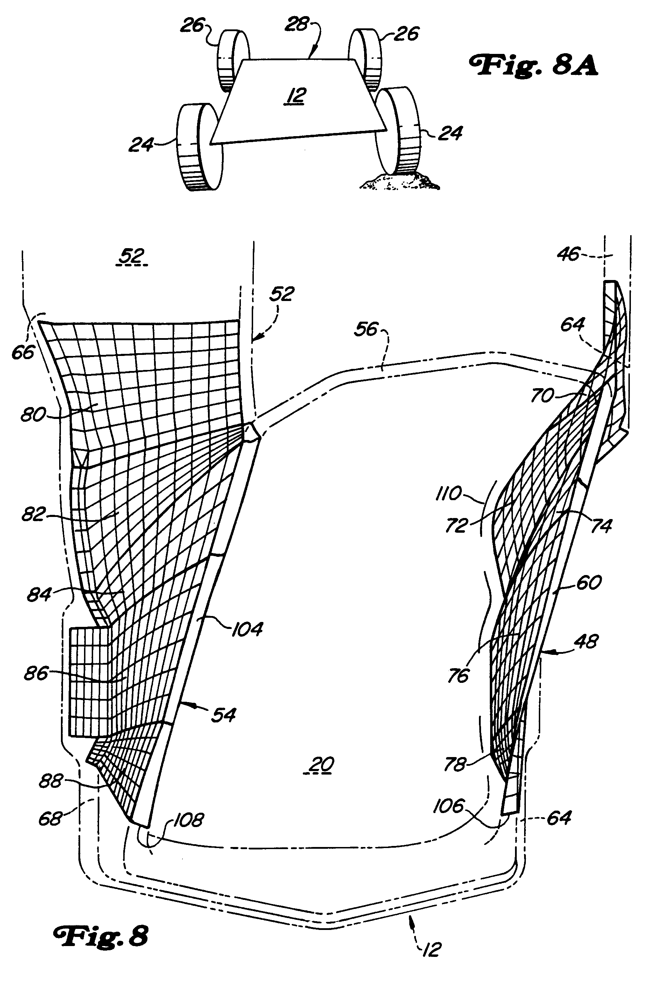

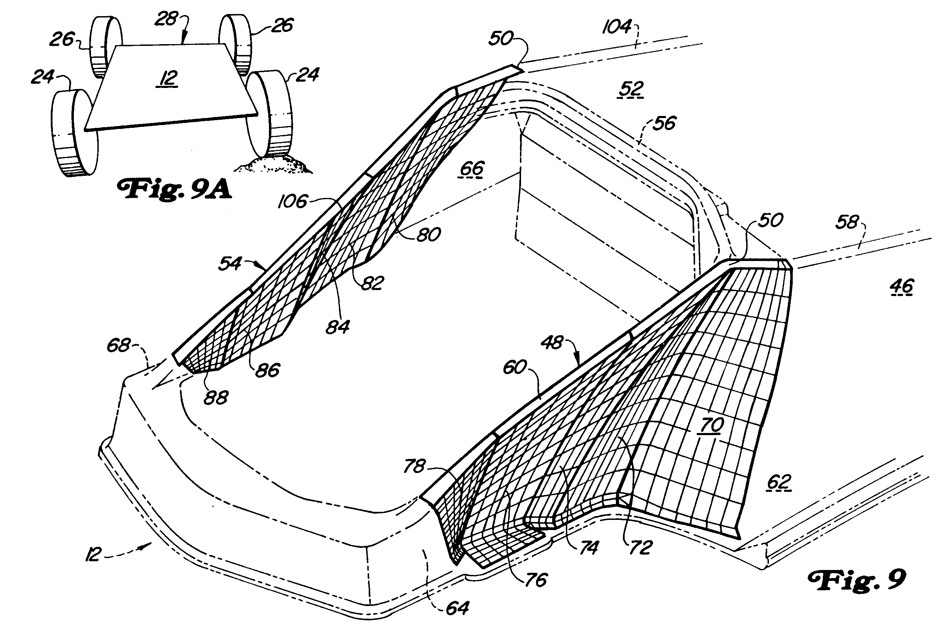

Die Fig. 8, 8A, 9 und 9A zeigen den Zustand der Flexteile an jeder Seite des Chassisaufbaus 12, wenn bei einem Überfahren eines Hindernisses durch das rechte rückwärtige Laufrad 24 (siehe auch Fig. 5B) Biege- und Torsionskräfte auftreten. Fig. 8 ist eine Draufsicht auf die Flexteile 70 bis 88 und Fig. 9 zeigt den Zustand dieser Flexteile dann in einer Ansicht von rechts und rückwärts. Aus den Fig. 8 und 9 ist nun erkennbar, daß die beiden Sätze Flexteile 70 bis 78 und 80 bis 88 in der Lage sind, sich einer erheblichen Deformation oder Verbiegung zwischen dem ersten und dem zweiten Starrteil 46 und 48 und dem dritten und vierten Starrteil 52 und 54 anzupassen, diese zu übertragen und diese aufzubrauchen bzw. aufzufangen.

Ein Vergleich der Flexteile in Fig. 3 im sogenannten unbelasteten Zustand mit den Flexteilen in Fig. 8 in einem belasteten Zustand läßt am besten erkennen, in welchem Maße eine Verbiegung und eine Verdrehung durch die Flexteile aufgefangen werden kann, wenn eines der Räder ein Hindernis überfährt. In Fig. 8 und 9 ist die obere Kante des vierten Starrteils mit 104 bezeichnet und man erkennt, daß in den Fig. 8 und 9 die oberen Kanten 60 und 104 des zweiten und vierten Starrteils 48 und 54 um ihre rückwärtigen Enden 106 und 108 verschwenkt sind, aber dennoch im wesentlichen zueinander parallel verlaufen, wenn der rechte rückwärtige Teil des Chassisaufbaus angehoben wird. Dieser Teil des Chassisaufbaus bleibt im wesentlichen starr, da er mit dem Motor- und Getriebemodul verankert ist. Auch der erste Starrteil 46, der mit dem ebenfalls im wesentlichen starren Frontabschnitt 28 des Chassisaufbaus verbunden ist und über den fünften Starrteil 56 mit der linken Seite des Chassisaufbaus in Verbindung steht, verbiegt sich kaum, wodurch die Flexteile 70, 72, 74, 76 und 78, die sich zwischen den ersten und den zweiten Starrteil 46 und 48 erstrecken, gezwungen werden, sich in der in Fig. 8 gezeigten Weise zu krümmen oder zu verdrehen. In einem solchen Zustand biegt sich auch der auf der linken Seite vorhandene Satz von Flexteilen 80, 82, 84, 86 und 88 in der in Fig. 8 gezeigten Weise aus.

Ein Vergleich der Fig. 3 und 8 zeigt, wie bei einem Auftreffen auf ein Hindernis nach Fig. 8A, jedes der fünf Flexteile auf der rechten Seite des Chassisaufbaus reagiert. Man erkennt, daß der erste Flexteil 70 sich nicht nur nach außen biegt und umbiegt, sondern sich auch an seiner Oberkante entgegen dem Uhrzeigerdrehsinn verdreht, wenn er Biege- und Torsionskräfte absorbiert. Der zweite Flexteil 72, der sich an den ersten Flexteil 70 anschließt und im wesentlichen flach ausgebildet ist, biegt sich dann an seiner Oberkante nach außen, ohne nennenswert zu verdrehen. Der dritte Flexteil 74 biegt sich an seiner Oberseite beträchtlich nach außen, wie es eine Flachfeder oder C-förmige Blattfeder tun würde. Der vierte Flexteil 76 biegt sich an seiner Oberseite zur Außenseite des Fahrzeugs 10, wobei sich seine vordere Kante in einem größeren Ausmaß ausbiegt, da hier auch ein Verdrehen im Uhrzeigerdrehsinn stattfindet. Der rückwärtige oder fünfte Flexteil 78 biegt ebenfalls nach außen, und zwar an seiner vorderen Kante mehr, da er im Uhrzeigerdrehsinn beim Absorbieren von Torsionskräften, die auf ihn durch den zweiten Starrteil 48 übertragen werden, verdreht wird. Im Ganzen gesehen verstellt sich die rechte Seite des Chassisaufbaus bei einem Belastungszustand nach Fig. 8A aus ihrem statischen Zustand in Fig. 3 in den belasteten Zustand nach Fig. 8, wobei also der erste Flexteil 70 sich sowohl verbiegt und auch verdreht, der zweite Flexteil 72 sich biegt und in einem geringeren Maße auch verdreht, der dritte Flexteil 74 sich primär biegt, der vierte Flexteil 76 sich bei einer leichten Verdrehung ebenfalls biegt und der fünfte Flexteil 78 sich erheblich verdreht und auch biegt.

Betrachtet man nun die zeitlichen Verformungen, die bei der Gruppe der Flexteile 70 bis 78 bei einem Auftreffen auf ein Hindernis, wie in Fig. 8A dargestellt, auftreten, so erkennt man, daß alle fünf Flexteile sich biegen und drehen, wie es eine Flachfeder tun würde. Der Biegeeffekt zwischen den Flexteilen ist in Fig. 8 durch die gestrichelte Linie 110 angedeutet, aus der eine Kombination von "C" und "S" Bögen zu erkennen ist. Hinzu kommt, daß der erste, dritte, vierte und fünfte Flexteil 70, 74, 76 und 78 erheblichen Verdrehungen ausgesetzt ist, wenn Torsionskräfte absorbiert werden.

Auf der anderen oder linken Seite des Chassisaufbaus 12 werden die anderen fünf Flexteile 80, 82, 84, 86 und 88 gebogen oder kurzfristig verformt, wenn das vordere Ende des vierten Starrteils 54 nach innen bewegt wird. Aus den Drahtgeflechtdarstellungen in Fig. 8 ist zu erkennen, daß der erste, dritte, vierte und fünfte Flexteil 80, 84, 86 und 88 erheblichen Verbiegungen und Verdrehungen ausgesetzt ist, wenn auf den Chassisaufbau einwirkende Biege- und Torsionskräfte absorbiert werden.

Vergleicht man wieder die Darstellungen in den Fig. 3 und 8 der Flexteile 80, 82, 84, 86 und 88, so erkennt man, daß der linke erste Flexteil 80 sich sowohl biegt als auch im Uhrzeigerdrehsinn verdreht. Der linke zweite Flexteil 82 biegt sich nach innen, während die linken dritten, vierten und fünften Flexteile 84, 86 und 88 nach innen gebogen und im Uhrzeigerdrehsinn verdreht werden.

Der erste und der zweite Starrteil 46 und 48 sind ferner noch mit dem fünften Starrteil 56 verbunden, der sich über die Mitte und den Mittenabschnitt 40 des Chassisaufbaus spannt. Dieser Starrteil 56 geht nicht nur in den ersten und zweiten Starrteil 46 und 48 sondern an seiner anderen Seite auch in den vierten und fünften Starrteil 52 und 54 über. Damit dient der fünfte Starrteil 56 auch dazu, die beiden Seiten des Chassisaufbaus zusammenzuhalten.

Aus den vorstehenden Erläuterungen geht hervor, daß, wenn die vorderen oder rückwärtigen Räder auf Bodenunebenheiten oder Hindernisse stoßen, der Chassisaufbau Biege- und Torsionskräften ausgesetzt ist, wobei die Flexteile zwischen den Starrteilen sich biegen und verdrehen, um diese Kräfte zu absorbieren und zu übertragen bzw. sich diesen anzupassen. Außerdem dienen die Flexteile als ein Federungssystem, um das Fahren angenehmer zu gestalten bzw. um Stöße bei einem Auftreffen auf Hindernisse, wenn der Chassisaufbau den Belastungen ausgesetzt ist und diese absorbiert, abzufedern.

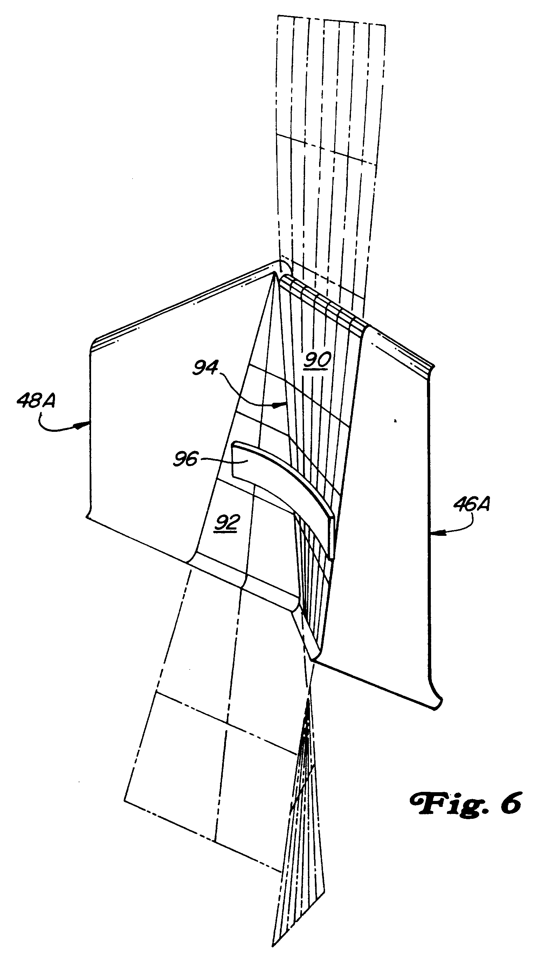

In Fig. 6 ist eine Ausführungsform wiedergegeben, bei der lediglich zwei Flexteile 90 und 92 zwischen den Starrteilen 46A und 48A Verwendung finden. Gegebenenfalls kann auch nur ein einziger Flexteil benötigt werden. Aus der schematischen Darstellung in Fig. 6 ist zu entnehmen, daß die Flexteile 90 und 92 an einer vertikalen Kante 94 miteinander verbunden sind bzw. ineinander übergehen. Entlang dieser Kante können sie sich wie ein Gelenk verstellen. Zusätzlich sind beide Flexteile in der Lage, sich auf ihrer gesamten Länge zu biegen, und zwar einzeln und gemeinsam. Wenn sie sich in dieser Art gemeinsam biegen, verhalten sie sich so, wie es eine flache Blattfeder tun würde (die in Fig. 6 durch die Blattfeder 96 angedeutet ist), um Biegekräfte, die zwischen dem ersten und dem zweiten Starrteil 46A und 48A übertragen werden, zu absorbieren.

Die Verwendung von Flexteilen zwischen zwei Starrteilen oder zwischen zwei im wesentlichen starren Teilen ist bei einem Chassisaufbau von ganz besonderem Nutzen. So können sie auch bei Fahrzeugkomponenten angewendet werden, wie bei einer Fahrzeugkabine. Bei einer Fahrzeugkabine können Flexteile zwischen der Kabine und dem Chassisaufbau benutzt werden, um beispielsweise eine Abfederung für die Kabine zu erreichen.

Die Stärke des Chassisaufbaus einschließlich aller Flexteile und der Starrteile beträgt beim bevorzugten Ausführungsbeispiel 4 mm. Um starre und flexible Charakteristika in designierten Abschnitten des Chassisaufbaus zu erzielen, wurde eine geometrische Formbildung eingesetzt. Die im wesentlichen starren Eigenschaften wurden ausgewählten Bereichen des Chassisaufbaus zugeordnet und durch eine "V"-förmige Gestaltung erreicht, wie z. B. im Sitzbereich, was in Fig. 10 zu erkennen ist. Die gerollten oder ähnlich gestalteten Kanten, wie sie bei 58, 42, 56, 104 und 48 zu erkennen sind, verleihen den entsprechenden Teilen des Chassisaufbaus die nötige Festigkeit. Desweiteren wurde eine dreiseitige Konfiguration, wie man sie an den Stellen 112, 114, 116 und 118 in Fig. 2 erkennen kann, eingesetzt, um designierten Abschnitten des Chassisaufbaus eine im wesentlichen starre Eigenschaft zu geben.

Die flexiblen Eigenschaften wurden an den designierten Teilen des 4 mm breiten Chassisaufbaus dadurch erreicht, daß die entsprechenden Paneele als Flachteile gestaltet wurden. Etwas Drall wurde den im wesentlichen flachen Paneelen mitgegeben, um die in den Chassisaufbau gelangenden Torsionsbelastungen besser aufnehmen, kontrollieren und abbauen zu können.

Andererseits können die starren und flexiblen Eigenschaften auch durch unterschiedliche Querschnittsstärken der entsprechenden Teile und Paneele erzielt werden. Generell starre Teile können dadurch erzielt werden, daß eine ausreichende Stärke gewählt wird, um die gewünschte Stabilität oder Festigkeit zu erreichen. Verschiedene Stärken können bei einem einzigen Teil vorgesehen sein, um die gewünschte Steifheit oder Flexibilität in dem entsprechenden Bereich des Chassisaufbaus zu erreichen. Derartige Querschnittsbreiten können großer oder kleiner sein, als die 4 mm bei dem bevorzugten Ausführungsbeispiel. Dies kann von der Werkstoffauswahl abhängen, und zwar von dem verwendeten Polymer, dem gewählten Fibermaterial, den eventuell gewählten Fiberschichten usw.

Eine andere Designmöglichkeit zu Erreichung der gewünschten starren und flexiblen Eigenschaften bei den entsprechenden Teilen des Chassis kann durch das Fibermaterial, die Fiberfeinheit und/oder der Kombinationen der im Chassis verwendeten Fibermaterialien bestimmt werden. So kann z. B. Glasfiber in den Abschnitten des Chassisaufbaus eingesetzt werden, die eine gewisse Flexibilität erfordern, während Kohlenstoffasern oder Fasern aus Aramiden in den Abschnitten eingesetzt werden können, die eine größere Steifigkeit erfordern. Derartige Fasern 120 (Fig. 11) können dem Polymer an beliebigen Stellen beigegeben werden. Kombinationen verschiedener Faserarten, Faserlängen, Faserbreiten und Fasergrößen sowie die Verteilung dieser Fasern in dem Polymer können ebenfalls dazu beitragen, um die erforderliche Flexibilität oder Steifigkeit für einen entsprechenden Chassisabschnitt, entsprechend den Designvorstellungen, zu erzielen. Schließlich können auch Fasern, die anisotropische oder auch isotropische Eigenschaften haben, dort eingesetzt werden, wo es zweckdienlich erscheint.

Um eine größere Steifigkeit zu erreichen, können auch, wie es aus Fig. 12 hervorgeht, Wirkwaren-Fibermatten 122 zwischen Polymerschichten 124 und 126 lamelliert sein. Entweder kann dasselbe Fiber geschichtet sein oder unterschiedliche Fasern 128 und 130 (Fig.13) können in gleicher oder ungleicher Richtung in dem Polymer geschichtet sein, um für die entsprechenden Abschnitte die gewünschten Ziele hinsichtlich Flexibilität und/oder Steifigkeit zu erreichen. Falls erwünscht, können auch willkürlich eingestreute Fasern 132 mit Matten oder Lamellen 134 von Werkstoff kombiniert werden, wie es aus Fig. 14 hervorgeht.

Weiter können auch verschiedene Polymerwerkstoff-Zusammensetzungen oder Kombinationen eingesetzt werden, um die variierenden Grade von Flexibilität oder Steifigkeit zu erreichen. So können Epoxidharze im Chassisaufbau verwendet werden bei den Teilen, die hauptsächlich eine größere Steifigkeit haben sollen, während Polyester Polymerwerkstoff für die Chassisabschnitte eingesetzt werden kann, wo sich die flexiblen Paneelen befinden. Alternativ können kompatible Polymere vermischt oder kombiniert werden, um die gewünschten Polymermatrix-Eigenschaften (hybridiziert) in Konsistenz mit den Designvorstellungen für Steifigkeit und/oder Flexibilität zu erzielen.

Beim bevorzugten Ausführungsbeispiel finden 60 Gewichtsprozent Glasfasern von 1 Zoll Länge und eine aushärtbare und im Druckschmelz- bzw. Preßstoffschmelzverfahren herstellbare Mischung auf Hybrid-Vinyl-Esterbasis Verwendung. Die Quantum Composite INL's QC-8800 Polymermischung ist für den bevorzugten Zweck zufriedenstellend. Die Glasfasern werden willkürlich in dem aushärtbaren Polymer plaziert, und der gesamte Chassisaufbau hat durchgehend eine Wandstärke von 4 mm. Auf diese Weise werden isotropische oder ähnliche Materialeigenschaften erzielt. Während einem Preßstoff- oder Druckschmelzverfahren für den aushärtbaren Polymer der Vorzug eingeräumt wird, kann der Chassisaufbau mit der Kombination aus Glasfasern und aushärtbaren Polymer in einem Flüssigstoff-Schmelzprozeß, wie ein Harzschmelz-Transferverfahren (RTM) oder in einem Schmelzspritzverfahren durch Strukturreaktion (SRIM), mit der entsprechenden Glasvorbehandlung hergestellt werden. Eine "hand lay-up" Herstellungstechnik kann ebenfalls angewendet werden, d. h. ein Verfahren zum Formen von Kunststoffartikeln, bei dem ein Verstärkungsgewebe, das mit einem Harz vorimprägniert sein kann, in einer Form oder über einer Form plaziert wird und Flüssigharz zugeführt wird mit anschließender Aushärtung, gegebenenfalls unter Druck.

Alternativ kann zur Herstellung des Chassisaufbaus nach Fig. 2 auch ein Thermoplast, wie Isoplast 101 von Dow, der 40% halb Zoll lange Glasfasern enthält, in einem Schmelzspritzverfahren Anwendung finden. Eine druckschmelzbare thermoplastische Mischung mit Glaslamelle, wie General Electric's Azdel oder Composite Plastics, Inc's pp-6-40-0.5AP könnte ebenfalls in einem Druckschmelzverfahren Anwendung finden.

Zusammenfassend ist damit festzuhalten, daß ein einstückiger Chassisaufbau vorgeschlagen wird, der sowohl starre als auch flexible Abschnitte oder Teile mit höherer Verformbarkeit und Teile mit geringer Verformbarkeit aufweist, so daß Biege- und/oder Torsionskräfte bzw. Belastungen aufgenommen und wieder abgebaut werden können, ohne daß es zu bleibenden Verformungen kommt. Stöße werden damit von dem Chassisaufbau absorbiert. Die Notwendigkeit für ein separates Federungssystem wird dadurch zumindest reduziert. Bereiche geringer Verformbarkeit werden durch eine geometrische oder profilierte Gestaltung, beispielsweise durch V-förmige Ausbildung oder Einrollen der Kanten usw. erzielt, wobei eine gleichmäßige Wandstärke für den gesamten Chassisaufbau beibehalten werden kann. Andererseits lassen sich die Bereiche mit höherer Verformbarkeit bzw. Elastizität - in der Beschreibung als Flexteile bezeichnet - und Bereiche mit geringerer Verformbarkeit bzw. Elastizität - in der Beschreibung auch als Starrteile bezeichnet - durch unterschiedliche Wandstärken, wechselnde Faserauswahlen und/oder Kombinationen und natürlich auch durch verschiedenste Polymere erreichen, wobei diese verschiedensten Möglichkeiten noch untereinander kombinierbar sind.

Anstelle des in einem Druckschmelzverfahren herstellbaren Chassisaufbaus aus einem aushärtbaren Polymer mit Glasfasern können selbstverständlich auch andere Fasern, wie Kohlenstoffasern oder Fasern mit Aramiden alleine oder in Kombination auch mit Glasfasern bei thermoplastischen oder duroplastischen Polymere zum Einsatz kommen. Wenn aushärtbare Polymere zum Einsatz kommen, so kann die Herstellung in einem Druck-, Preßstoff- oder Spritzschmelzverfahren erfolgen. Ein "lay-up" Verfahren ist ebenfalls möglich.

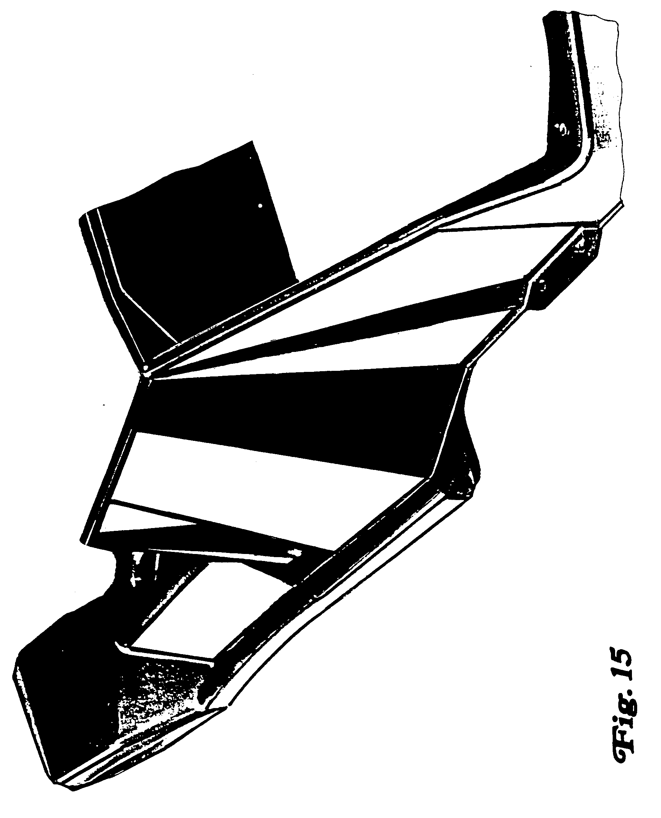

Bei dem Ausführungsbeispiel ist das Chassis einstückig gegossen bzw. einstückig aus Kunststoff hergestellt. Dies läßt sich besonders gut in Fig. 15 erkennen, die gegenüber der Darstellung in Fig. 2 leicht abgewandelt ist und aus Gründen der Klarheit nicht mit Bezugszeichen versehen wurde. Die Fig. 15 zeigt besonders eindrucksvoll, wie die Flexteile von den Starrteilen umfasst sind. Man erkennt die die obere Begrenzung bildenden wulstähnlichen Starrteile und den trapezförmigen und an seinen Seiten als Hohlkörper ausgebildeten Mittenabschnitt für die Fahrersitzaufnahme. Die in Querrichtung bzw. nicht in Längsrichtung verlaufenden Teile sind der besseren Erkennbarkeit wegen dunkel dargestellt. Bodenwärts sind weitere Verstärkungen einschließlich der Befestigungsplattte für den Anschluß an die Motor- Getriebekombination sichtbar. Im Bereich der unteren Enden der Flexteile sind diese Verstärkungen relativ dünn gestaltet.

Der besondere Kunststoffaufbau hat Federungseigenschaften und kann aus einer ganzen Reihe von Kunststoffen bestehen. Die Kunststoffe sind vorteilhaft Faser verstärkt, wobei die Fasern ebenfalls vielfältiger Art sein können. Als Kunststoffe können Thermoplaste und/oder Thermodure dienen. Sie eignen sich für eine Massenherstellung und geben dem Konstrukteur die Möglichkeit, je nach den erforderlichen Anforderungen den wirtschaftlichsten und kostengünstigsten Herstellungsweg auszuwählen.

## Patentansprüche

1. Ausschließlich aus Kunststoff bestehender Chassisaufbau (12) für ein Fahrzeug (10) zur Aufnahme einer Antriebsvorrichtung, von lenkbaren und antreibbaren Rädern (24, 26) und einer Lenkeinrichtung, wobei der Chassisaufbau in seinem einen Endbereich einen Leerraum (20) aufweist, in dem eine sich auf mindestens einem Rad (24) abstützende Kombination (22) aus Getriebe und Fahrzeugmotor befindet, an der der Chassisaufbau (12) befestigt ist, dadurch gekennzeichnet, daß der Chassisaufbau (12) aus mindestens zwei Abstand zueinander aufweisenden Teilen mit geringer Flexibilität und aus eine höhere Flexibilität aufweisenden oder relativ flexiblen Teilen zur Aufnahme von Torsion- und/oder Biegekräften gebildet ist und mit Bezug auf seine Längsrichtung vor und hinter den Teilen (70-88) mit einer höheren Flexibilität nur Teile mit einer geringeren Flexibilität aufweist, wobei wenigstens einige der Teile (72-78, 82-88) mit höherer Flexibilität den Leerraum (20) seitlich begrenzen, und an deren Oberseite Teile (48, 54) mit einer geringeren Flexibilität vorgesehen sind.

2. Chassisaufbau nach Anspruch 1, dadurch gekennzeichnet, daß der Chassisaufbau (12) einstückig geformt ist.

3. Chassisaufbau nach Anspruch 1, dadurch gekennzeichnet, daß die Teile mit der geringeren Flexibilität profilierte Abschnitte aufweisen.

4. Chassisaufbau nach Anspruch 1, wobei der Chassisaufbau (12) einen Abschnitt (40) zur Aufnahme eines Fahrersitzes (34) aufweist, dadurch gekennzeichnet, daß Teile (70, 80) mit höheren Flexibilität sich in dem Abschnitt (40) für die Fahrersitzaufnahme befinden, sich an die den Leerraum (20) seitlich begrenzenden Teile (72-78, 82-88) anschließen und an ihrer Oberkante Teile mit einer geringeren Flexibilität aufnehmen.

5. Chassisaufbau nach Anspruch 4, dadurch gekennzeichnet, daß die die Oberkante oder Oberseite der Teile (70-88) mit höherer Flexibilität bildenden Teile (48, 50) mit geringerer Flexibilität miteinander über einen weiteren Teil (56) mit geringerer Flexibilität verbunden sind.

6. Chassisaufbau nach einem oder mehreren der vorherigen Ansprüche, dadurch gekennzeichnet, daß die Teile (70-88) mit einer höheren Flexibilität derart ausgebildet sind, daß sie bei auf die Teile mit einer geringeren Flexibilität einwirkenden Torsions- und/oder Biegekräften sich drehen und biegen können.

7. Chassisaufbau nach einem oder mehreren der vorherigen Ansprüche, dadurch gekennzeichnet, daß die Teile mit einer höheren Flexibilität an jeder Chassisseite mindestens zwei flexible sich längs erstreckende Abschnitte aufweisen, die an einer gemeinsamen Kante miteinander verbunden sind.

8. Chassisaufbau nach Anspruch 7, dadurch gekennzeichnet, daß wenigstens ein flexibler Abschnitt eine längs verlaufende Kante aufweist, die mit einer Kante eines Teils mit geringerer Flexibilität integriert ist.

9. Chassisaufbau nach Anspruch 3, dadurch gekennzeichnet, daß die Teile mit geringerer Flexibilität über Scharnierteile miteinander verbunden sind, die erste und zweite relativ flexible Abschnitte aufweisen, so daß ein erster Teil mit geringerer Flexibilität gegenüber einem zweiten Teil mit geringerer Flexibilität sich relativ bewegen kann.

10. Chassisaufbau nach Anspruch 9, dadurch gekennzeichnet, daß jeder Scharnierteil einen dritten flexiblen Abschnitt aufweist, der mit dem ersten flexiblen Abschnitt verbunden ist.

11. Chassisaufbau nach Anspruch 10, dadurch gekennzeichnet, daß jeder Scharnierteil einen fünften flexiblen Abschnitt aufweist, der mit dem ersten flexiblen Abschnitt verbunden ist.

12. Chassisaufbau nach Anspruch 9, dadurch gekennzeichnet, daß mindestens ein flexibler Abschnitt sich längs erstreckend ausgebildet und um seine Längsachse gedreht ist.

13. Chassisaufbau nach Anspruch 9, dadurch gekennzeichnet, daß die beiden flexiblen Abschnitte bei auf die Teile mit der geringeren Flexibilität einwirkenden Torsions- und/oder Biegekräften sich nach innen und nach außen biegen können.

14. Chassisaufbau nach einem oder mehreren der vorherigen Ansprüche, dadurch gekennzeichnet, daß zwei zusammenwirkende Teile mit höherer Flexibilität Blattfedereigenschaften haben.

15. Chassisaufbau nach einem oder mehreren der vorherigen Ansprüche, dadurch gekennzeichnet, daß zwei zusammenwirkende Teile mit höherer Flexibilität Federungs- bzw. Dämpfungseigenschaften haben.

16. Chassisaufbau nach Anspruch 3, dadurch gekennzeichnet, daß wenigstens eines der Teile mit einer geringeren Flexibilität V-förmig ausgebildet ist.

17. Chassisaufbau nach Anspruch 4, dadurch gekennzeichnet, daß der Abschnitt zur Fahrersitzaufnahme an den beiden Seiten des Chassis V-förmig ausgebildet ist, so daß in diesem Bereich eine geringere Flexibilität herrscht.

18. Chassisaufbau nach Anspruch 3, dadurch gekennzeichnet, daß wenigstens eines der Teile mit einer geringeren Flexibilität eine gerollte Kante aufweist.

19. Chassisaufbau nach Anspruch 3, dadurch gekennzeichnet, daß wenigstens eines der Teile mit einer geringeren Flexibilität in einem spitzen Winkel gekröpft ausgebildet ist.

20. Chassisaufbau nach Anspruch 3, dadurch gekennzeichnet, daß wenigstens eines der Teile mit einer geringeren Flexibilität aus drei im wesentlichen planaren Paneelen besteht, die miteinander verbunden sind und einen C-förmigen Abschnitt bilden.

21. Chassisaufbau nach einem oder mehreren der vorherigen Ansprüche, dadurch gekennzeichnet, daß der Werkstoff, aus dem der Chassisaufbau besteht, isotropisch ist.

22. Chassisaufbau nach einem oder mehreren der vorherigen Ansprüche, dadurch gekennzeichnet, daß der Kunststoff, aus dem der Chassisaufbau besteht, verstärkt ist, wobei die Verstärkungen im Chassis gleichmäßig verteilt sind.

23. Chassisaufbau nach Anspruch 22, dadurch gekennzeichnet, daß die Verstärkungen gewirkte Fiberlamellen bzw. -matten aufweisen.

24. Chassisaufbau nach Anspruch 23, dadurch gekennzeichnet, daß zumindest zwei Fiberlamellen bzw. -matten vorgesehen sind, wobei deren Ausrichtung nicht fluchtet.

25. Chassisaufbau nach einem oder mehreren der vorherigen Ansprüche, dadurch gekennzeichnet, daß der Kunststoff, aus dem der Chassisaufbau besteht, Glasfiber-Verstärkungen aufweist.

26. Chassisaufbau nach Anspruch 25, dadurch gekennzeichnet, daß das Glasfiber ohne bevorzugte Orientierung im Kunststoff verteilt ist.

27. Chassisaufbau nach einem oder mehreren der vorherigen Ansprüche, dadurch gekennzeichnet, daß der Chassisaufbau dünnwandig gestaltet ist.

## Claims

1. A chassis structure (12) consisting exclusively of plastics material for a vehicle (10), for reception of a drive arrangement, steerable and driven wheels (24, 26) and a steering device, wherein the chassis structure has an empty space (20) in its end region, In which a combination (22) of transmission and vehicle engine supported on at least one wheel (24) is located, to which combination the chassis structure (12) is fixed, characterized in that the chassis structure (12) is formed from at least two parts with smaller flexibility spaced from one another and of parts having higher flexibility or relatively flexible parts for accepting torsional and/or bending forces and, in relation to its longitudinal direction, comprises only parts with a smaller flexibility in front of and behind the parts (70-88) with a higher flexibility, wherein at least some of the parts (72-78, 82-88) with higher flexibility bound the empty space (20) at the sides and parts (48, 54) with a smaller flexibility are provided at its upper side.

2. A chassis structure according to claim 1, characterized in that the chassis structure (12) is formed in one piece.

3. A chassis structure according to claim 1, characterized in that the parts with the smaller flexibility have profiled sections.

4. A chassis structure according to claim 1, wherein the chassis structure (12) comprises a section (40) for reception of a driver's seat (34), characterized in that parts (70, 80) with higher flexibility are located in the section (40) for receiving the driver's seat, adjoin parts (72-78, 82-88) bounding the empty space (20) and receive parts with a smaller flexibility at their upper edge.

5. A chassis structure according to claim 4, characterized in that the parts (48, 50) with smaller flexibility forming the upper edge or upper side of the parts (70-88) with higher flexibility are connected together through a further part (56) with smaller flexibility.

6. A chassis structure according to one or more of the preceding claims, characterized in that the parts (70-88) with a higher flexibility are so formed that they can twist and bend when torsional and/or bending forces act on the part with a smaller flexibility.

7. A chassis structure according to one or more of the preceding claims, characterized in that the parts with a higher flexibility comprise at least two flexible sections extending longitudinally at each chassis side, which sections are connected together at a common edge.

8. A chassis structure according to claim 7, characterized in that at least one flexible section has a longitudinally extending edge which is integrated with an edge of a part with smaller flexibility.

9. A chassis structure according to claim 3, characterized in that the parts with smaller flexibility are connected together through hinge parts, which comprise first and second relatively flexible sections, so that a first part with smaller flexibility can move relative to a second part with smaller flexibility.

10. A chassis structure according to claim 9, characterized in that each hinge part comprises a third flexible section which is connected to the first flexible section.

11. A chassis structure according to claim 10, characterized in that each hinge part comprises a fifth flexible section which is connected to the first flexible section.

12. A chassis structure according to claim 9, characterized in that at least one flexible section is of longitudinally extending form and is twisted about its longitudinal axis.

13. A chassis structure according to claim 9, characterized in that the two flexible sections can bend inwards and outwards when torsional and/or bending forces act on the parts with the smaller flexibility.

14. A chassis structure according to one or more of the preceding claims, characterized in that two cooperating parts with higher flexibility have leaf spring characteristics.

15. A chassis structure according to one or more of the preceding claims, characterized in that two cooperating parts with higher flexibility have springing or damping characteristics.

16. A chassis structure according to claim 3, characterized in that at least one of the parts with a smaller flexibility is of V-shaped form.

17. A chassis structure according to claim 4, characterized in that the section for receiving the driver's seat is of V-shaped form on both sides of the chassis, so that a smaller flexibility obtains in this region.

18. A chassis structure according to claim 3, characterized in that at least one of the parts with a smaller flexibility has a rolled edge.

19. A chassis structure according to claim 3, characterized in that at least one of the parts with a smaller flexibility is formed with an offset at an acute angle.

20. A chassis structure according to claim 3, characterized in that at least one of the parts with a smaller flexibility consists of three essentially planar panels which are connected together and form a C-shaped section.

21. A chassis structure according to one or more of the preceding claims, characterized in that the material of which the chassis structure consists is isotropic.

22. A chassis structure according to one or more of the preceding claims, characterized in that the plastics material of which the chassis consists is reinforced, wherein the reinforcement is uniformly distributed in the chassis.

23. A chassis structure according to claim 22, characterized in that the reinforcement comprises knitted fibre sheets or mats.

24. A chassis structure according to claim 23, characterized in that at least two fibre sheets or mats are provided whose orientations are non-aligned.

25. A chassis structure according to one or more of the preceding claims, characterized in that the plastics material of which the chassis consists comprises glass fibre reinforcement.

26. A chassis structure according to claim 25, characterized in that the glass fibre is distributed in the plastics material without a preferred orientation.

27. A chassis structure according to one or more of the preceding claims, characterized in that the chassis structure is of thin-walled form.

## Revendications

1. Structure de châssis (12) réalisée exclusivement en matière plastique pour un véhicule (10), servant à recevoir un dispositif d'entraînement, des roues orientables et des roues pouvant être entraînées (24,26) et un dispositif de direction, dans lequel la structure de châssis inclut, dans l'une de ses parties d'extrémité, un espace libre, dans lequel est situé un ensemble combiné (22) formé par une transmission et un moteur du véhicule et qui prend appui sur au moins une roue (24) et à laquelle est fixée la structure de châssis (12), caractérisé en ce que la structure de châssis (12) est constituée par au moins deux parties distantes l'une de l'autre, qui ont une faible flexibilité et par des parties possédant une flexibilité supérieure ou qui sont relativement flexibles et servent à supporter des forces de torsion et/ou de flexion, et possède uniquement des parties ayant une flexibilité réduite, en avant et en arrière des parties (70-80) possédant une flexibilité supérieure dans la direction longitudinale de la structure de châssis, et dans laquelle au moins quelques-unes des parties (72-78, 82-88) possédant une flexibilité supérieure délimitent latéralement l'espace libre (20), et que des parties (48,54) ayant une flexibilité réduite sont prévues au niveau du côté supérieur de l'ensemble combiné.

2. Structure de châssis selon la revendication 1, caractérisée en ce que la structure de châssis (12) est réalisée d'un seul tenant.

3. Structure de châssis selon la revendication 1, caractérisée en ce que les parties ayant une flexibilité réduite possèdent des sections profilées.

4. Structure de châssis selon la revendication 1, dans laquelle la structure de châssis (12) possède une partie (40) servant à recevoir un siège de conducteur (34), caractérisée en ce que des parties (70,80) ayant une flexibilité accrue sont situées dans la partie (40) servant à recevoir le siège de conducteur, se raccordent aux parties (72-78, 82-88) qui délimitent latéralement l'espace libre (20), et reçoivent, au niveau de leur bord supérieur, des parties ayant une flexibilité réduite.

5. Structure de châssis selon la revendication 4, caractérisée en ce que les parties (48,50) ayant une flexibilité réduite, qui constituent le bord supérieur ou le côté supérieur des parties (70-88) ayant une flexibilité accrue, sont reliées entre elles par l'intermédiaire d'une autre partie (56) ayant une flexibilité réduite.

6. Structure de châssis selon une ou plusieurs des revendications précédentes, caractérisée en ce que les parties (70-88) ayant une flexibilité accrue sont agencées de telle sorte qu'elles peuvent tourner et fléchir dans le cas où des forces de torsion et/ou de flexion agissent sur les parties ayant une flexibilité réduite.

7. Structure de châssis selon une ou plusieurs des revendications précédentes, caractérisée en ce que les parties ayant une flexibilité accrue possèdent de chaque côté du châssis au moins deux éléments longitudinaux flexibles, qui sont reliés entre eux au niveau d'un bord commun.

8. Structure de châssis selon la revendication 7, caractérisée en ce qu'au moins une partie flexible possède un bord longitudinal qui est intégré à un bord d'une partie ayant une flexibilité réduite.

9. Structure de châssis selon la revendication 3, caractérisée en ce que les parties ayant une flexibilité réduite sont reliées entre elles par l'intermédiaire de parties formant charnières, qui possèdent des premier et second éléments relativement flexibles de sorte qu'une première partie ayant une flexibilité réduite peut se déplacer d'une manière relative par rapport à une seconde partie ayant une flexibilité réduite.

10. Structure de châssis selon la revendication 9, caractérisée en ce que chaque partie de charnière possède un troisième élément flexible qui est relié à la première partie flexible.

11. Structure de châssis selon la revendication 10, caractérisée en ce que chaque partie de charnière possède un cinquième élément flexible, qui est relié au premier élément flexible.

12. Structure de châssis selon la revendication 9, caractérisée en ce qu'au moins un élément flexible est agencé de manière à s'étendre longitudinalement et peut tourner autour de son axe longitudinal.

13. Structure de châssis selon la revendication 9, caractérisé en ce que les deux éléments flexibles peuvent fléchir vers l'intérieur et vers l'extérieur dans le cas de forces de torsion et/ou de flexion qui agissent sur les parties ayant une flexibilité réduite.

14. Structure de châssis selon une ou plusieurs des revendications précédentes, caractérisée en ce que deux parties coopérantes ayant une flexibilité accrue possèdent des caractéristiques de ressorts à lames.

15. Structure de châssis selon une ou plusieurs des revendications précédentes, caractérisée en ce que deux parties coopérantes ayant une flexibilité accrue possèdent des caractéristiques de suspension ou d'amortissement.

16. Structure de châssis selon la revendication 3, caractérisée en ce qu'au moins l'une des parties ayant une flexibilité réduite est agencée en forme de V.

17. Structure de châssis selon la revendication 4, caractérisée en ce que la partie servant à recevoir le siège du conducteur est réalisée en forme de V sur les deux côtés du châssis de sorte qu'une flexibilité réduite existe dans cette zone.

18. Structure de châssis selon la revendication 3, caractérisée en ce qu'au moins l'une des parties ayant une flexibilité réduite possède un bord cintré.

19. Structure de châssis selon la revendication 3, caractérisée en ce qu'au moins l'une des parties ayant une flexibilité réduite est réalisée en étant coudée selon un angle aigu.

20. Structure de châssis selon la revendication 3, caractérisée en ce qu'au moins l'une des parties ayant une flexibilité réduite est constituée de trois panneaux essentiellement plats, qui sont reliés entre eux et forment une partie en forme de C.

21. Structure de châssis selon une ou plusieurs des revendications précédentes, caractérisée en ce que le matériau, dont est constituée la structure de châssis, est isotrope.

22. Structure de châssis selon une ou plusieurs des revendications précédentes, caractérisée en ce que la matière plastique, dont est constituée la structure de châssis, est renforcée, les renforts étant répartis uniformément dans le châssis.

23. Structure de châssis selon la revendication 22, caractérisée en ce que les renforts possèdent des lamelles ou des nappes tricotées formées de fibres.

24. Structure de châssis selon la revendication 23, caractérisée en ce qu'il est prévu au moins deux lamelles ou nappes formées de fibres, dont les orientations ne sont pas alignées entre elles.

25. Structure de châssis selon une ou plusieurs des revendications précédentes, caractérisée en ce que la matière plastique, dont est constituée la structure de châssis, comporte des renforts formés de fibres de verre.

26. Structure de châssis selon la revendication 25, caractérisée en ce que la fibre de verre est répartie sans orientation préférentielle dans la matière plastique.

27. Structure de châssis selon une ou plusieurs des revendications précédentes, caractérisée en ce que la structure de châssis est réalisée avec une paroi mince.
